# EUROPEAN PATENT APPLICATION

(11) **EP 2 233 191 A1**
(43) Date of publication of application: **29.09.2010**
(21) Application number: 08702886.6
(22) Date of filing: 04.01.2008
(51) Int. Cl.: B01D 41/04, B08B 3/02

(54) **FILTER CLEANING APPARATUS AND METHOD OF CLEANING FILTER**

(71) Applicant: Freund Corporation, Tokyo 163-6034 (JP)
(72) Inventor: ISOBE, Shigemi, Tokyo 163-6034 (JP); MORIMOTO, Yasuaki, Tokyo 163-6034 (JP); HIRAI, Yuriko, Tokyo 163-6034 (JP)
(74) Representative: HOFFMANN EITLE
(86) International application number: PCT/JP2008/050005
(87) International publication number: WO 2009/087750

(57) **Abstract**

A filter cleaning apparatus is a device designed exclusively for cleaning a cartridge filter used in a fluidized bed granulator. A cleaning liquid 10 is reserved in a processing container 2. In the processing container 2, a cartridge filter 3 is placed in the state of being immersed in the cleaning liquid 10. The filter 3 is so disposed as to be capable of rotating around a rotational axis line O that is substantially horizontal in the processing container 2. Air nozzles 8 are disposed below the cartridge filter 3. An uplift pressure of bubbles rising out of the liquid into the atmosphere is added to a bubble flow BF jetted from the air nozzles 8. As a result of the synergic effect of the jet pressure of the bubble flow BF and the uplift pressure, the filter 3 rotates in an efficient way, leading to an improvement in cleaning efficiency.

## Description

### Technical Field

The present invention relates to a technique of cleaning a filter mounted on a powder and granular material processing apparatus and particularly to a cleaning process for a cartridge filter having a pleated structure.

### Background Art

In the field of medicine, cosmetics and food, various products are made through such processes as granulating, coating, mixing and drying of a finely divided substance like powder or powder and granular material. For such processes, a powder and granular material processing apparatus is used such as a fluidized bed granulation coating apparatus that performs a process of granulating by using a gas flow to fluidize a finely divided substance and other processes. In such a powder and granular material processing apparatus, a gas is supplied to fluidize powder and granular material; a filter is provided to separate powder and granular material from the exhaust thereof. The filter filtered out the powder and granular material that is fluidized by gas flow; only the gas is separated and released to the outside of the powder and granular material processing apparatus.

As a filter used for the powder and granular material processing apparatus, a pleated filter made from filter cloth is often used in order to increase a filtering area. However, in such a filter, the clogging of the filter medium hampers the flow of the gas and the fluidization of the powder and granular material, leading to a decrease in processing efficiency. Therefore, in order to prevent the filter medium from getting clogged, fine powder adhering to the filter medium is dusted off when necessary. The dusting off of fine powder is carried out by supplying pulse air in a direction opposite to that of a fluidized gas flow.

However, even such a dust-off process cannot dust off the powder adhering to the filter completely. The resistance against the flow of air increases as the powder gradually accumulates. Accordingly, it is necessary to perform a cleaning process of the filter separately after a predetermined period of processing in case of performing granulation and other processes. In particular, when a pleated filter is used, the fine powder that is stuck in the recesses of the pleat tends to agglomerate. Moreover, it is difficult even for backwashing air to reach the recesses of the pleat. Therefore, it is difficult to sufficiently remove fine powder in the recesses of the pleat.

For a pleated filter or the like, a wet cleaning method, such as the one disclosed in Patent Document 1, has been proposed in which the filter is rotated for cleaning. According to the cleaning method, the pleated filter is so set as to be capable of rotating; a cleaning liquid is obliquely jetted to the periphery of the pleated filter. The filter that receives the cleaning liquid rotates inside a cleaning apparatus. The cleaning liquid is intensively and efficiently jetted to the entire surface of the filter. Accordingly, the fine powder that is stuck in the recesses of the pleat is removed to the outside of the filter by centrifugal force; an efficient cleaning process is carried out. In addition, a method has been proposed to dispose a filter in a processing container filled with the cleaning liquid, jet a bubble flow or a cleaning liquid (or water) plus a bubble flow instead of the cleaning liquid, and rotate the filter in the liquid for cleaning.
- Patent Document 1:: Jpn. Pat. Appln. Laid-Open Publication No. 6-262015
- Patent Document 2:: Jpn. Pat. Appln. Laid-Open Publication No. 10-235168
- Patent Document 3:: Jpn. Pat. Appln. Laid-Open Publication No. 2004-97936

### Disclosure of the Invention

### Problems to be Solved by the Invention

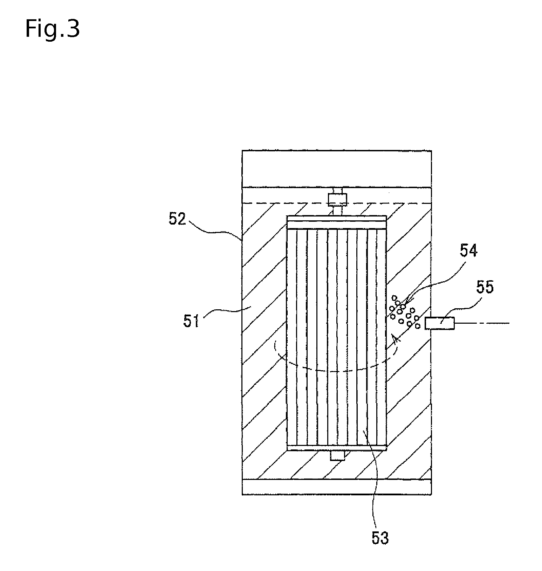

However, for a device, like the one disclosed in Patent Document 1, in which a filter is longitudinally put in a processing container (with the rotational axis being set in the vertical direction) and the filter is rotated for cleaning with a cleaning liquid, bubble flow or the like being jetted in the lateral direction (horizontal direction) toward the filter, an efficient cleaning process may be impossible. For example, as shown in FIG. 3, according to a method of laterally jetting a bubble flow or the like 54 with a filter 53 longitudinally put in a processing container 52 filled with a cleaning liquid 51, the bubble flow or the like 54 jetted from a nozzle 55 rises into the atmosphere after jet. Accordingly, the bubble flow or the like 54 does not hit the filter 53 at right angles; the use of the bubble flow or the like alone may not be enough to make the cleaning process efficient.

The obj active of the present invention is to provide a filter cleaning apparatus and a cleaning method that enable a cartridge filter used in a fluidized bed granulator or the like to be cleaned efficiently.

### Means for Solving the Problems

According to the present invention, a filter cleaning apparatus is characterized by including: a processing container that is so formed as to be capable of retaining a cleaning liquid and housing a filter used in a powder and granular material processing apparatus in such a way that the filter can rotate in the state that the cleaning liquid is poured and retained; and a nozzle device that is attached to the processing container and jets a bubble flow or a liquid containing bubbles to the filter being immersed in the cleaning liquid to rotate and clean the filter in the cleaning liquid, wherein the filter is so disposed as to be capable of rotating around a rotational axis line that is substantially horizontal in the processing container, and the nozzle device is disposed below the filter.

According to the present invention, the filter is so disposed as to be capable of rotating around the rotational axis line that is substantially horizontal, and the nozzle device is disposed below the filter. Therefore, an uplift pressure of bubbles rising out of the liquid into the atmosphere is added to the bubble flow or the liquid containing bubbles jetted from the nozzle device. As a result of the synergic effect of the jet pressure of the bubble flow and the uplift pressure, the filter rotates in an efficient way.

In the filter cleaning apparatus, the processing container may include: a filter supporting member that supports a rotational axis attached to the center of the filter in such a way that the rotational axis can rotate; and a nozzle device that jets a bubble flow or a liquid containing bubbles from below the filter to the filter. The filter may be a cartridge filter having a pleated structure, such as a cylindrical cartridge filter formed by pleating a filter cloth.

According to the present invention, a filter cleaning method of cleaning a filter used in a powder and granular material processing apparatus, housing the filter in a processing container in which a cleaning liquid is reserved; is characterized by including the steps of: disposing the filter in the processing container with the center of the filter aligned with a rotational axis line that is substantially horizontal in such a way that the filter can rotate; and jetting a bubble flow or a liquid containing bubbles from a nozzle device disposed below the filter in the processing container to the filter in the tangential direction to rotate and clean the filter by the bubble flow or the liquid containing bubbles. In this case, the filter may be a cartridge filter having a pleated structure.

According to the present invention, the filter is disposed in the processing container with the center of the filter aligned with the rotational axis line that is substantially horizontal in such a way that the filter can rotate; and a bubble flow or a liquid containing bubbles is jetted from the nozzle device disposed below the filter to the filter in the tangential direction to rotate and clean the filter by the bubble flow or the liquid containing bubbles. Therefore, an uplift pressure of bubbles rising out of the liquid into the atmosphere is added to the bubble flow jetted from the nozzle device. As a result of the synergic effect of the jet pressure of the bubble flow and the uplift pressure, the filter rotates in an efficient way, leading to an improvement in cleaning efficiency.

### Advantages of the Invention

According to the filter cleaning apparatus of the present invention where the filter is put in the processing container in which the cleaning liquid is reserved and a cleaning process is carried out by rotating the filter by means of the bubble flow or the liquid containing bubbles jetted from the nozzle device attached to the processing container, the filter is so disposed as to be capable of rotating around the rotational axis line that is substantially horizontal, and the nozzle device is disposed below the filter. Therefore, an uplift pressure of bubbles rising out of the liquid into the atmosphere is added to the bubble flow jetted from the nozzle device. As a result of the synergic effect of the jet pressure of the bubble flow and the uplift pressure, the filter rotates in an efficient way, thereby enabling the energy of the bubbles to be used efficiently and making an efficient cleaning process possible.

According to the filter cleaning method of the present invention by which the filter is put in the processing container in which the cleaning liquid is reserved and a cleaning process is carried out by rotating the filter by means of the bubble flow or the liquid containing bubbles jetted from the nozzle device attached to the processing container, the filter is so disposed as to be capable of rotating around the rotational axis line that is substantially horizontal in the processing container, and the bubble flow or the liquid containing bubbles is jetted from the nozzle device disposed below the filter to the filter in the tangential direction to rotate and clean the filter by the bubble flow or the liquid containing bubbles. Therefore, an uplift pressure of bubbles rising out of the liquid into the atmosphere is added to the bubble flow jetted from the nozzle device. As a result of the synergic effect of the jet pressure of the bubble flow and the uplift pressure, the filter rotates in an efficient way, thereby enabling the energy of the bubbles to be used efficiently and making an efficient cleaning process possible.

### Brief Description of the Drawings

FIG. 1 is an explanatory diagram illustrating the configuration of a filter cleaning apparatus according to an embodiment of the present invention, and a cross-sectional view of the device as viewed in the lateral direction.
FIG. 2 is a cross-sectional view of the filter cleaning apparatus of FIG. 1 as viewed in the front direction.
FIG. 3 is an explanatory diagram illustrating a cleaning process by a conventional filter cleaning apparatus.

### Explanation of Reference Symbols

- 1:: Filter cleaning apparatus
- 2:: Processing container
- 3:: Cartridge filter
- 4:: Base plate
- 5:: Supporting legs
- 6a, 6b:: Filter supporting plates (filter supporting members)
- 7:: Rotational axis
- 8:: Air nozzles (nozzle device)
- 9:: Air supply pipe
- 10:: Cleaning liquid
- 11:: Drain
- 51:: Cleaning liquid
- 52:: Processing container
- 53:: Filter
- 54:: Bubble flow or the like
- 55:: Nozzle
- BF:: Bubble flow
- O:: Rotational axis line
- S:: Liquid surface

### Best Mode for Currying Out the Invention

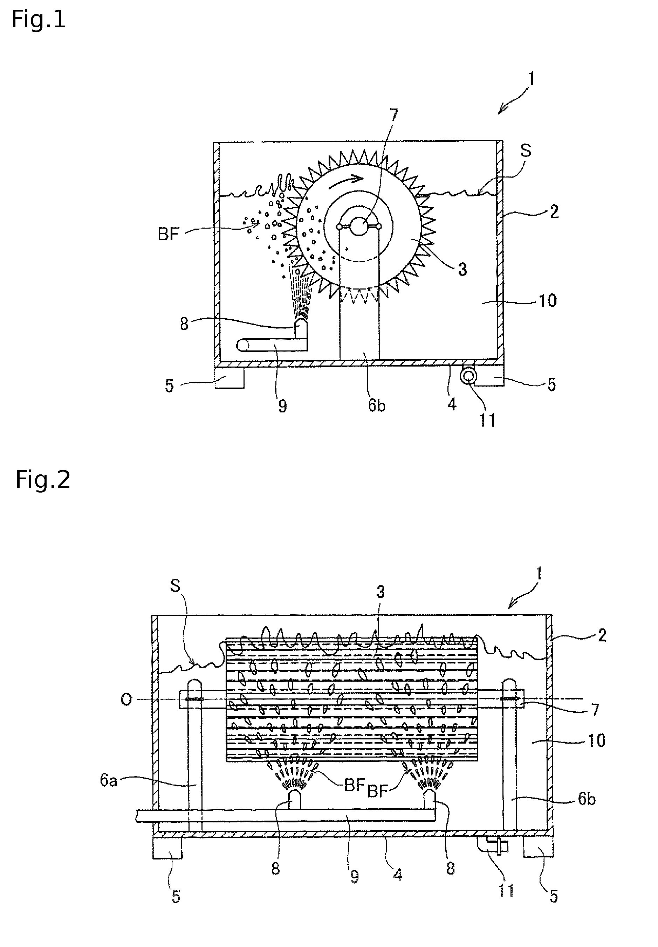

FIG. 1 is an explanatory diagram illustrating the configuration of a filter cleaning apparatus according to an embodiment of the present invention, and a cross-sectional view of the device as viewed in the lateral direction. FIG. 2 is a cross-sectional view of the filter cleaning apparatus of FIG. 1 as viewed in the front direction. The filter cleaning apparatus 1 of FIG. 1 is a cleaning apparatus for a cartridge filter used in a powder and granular material processing apparatus such as a fluidized bed granulation coating device and is formed separately from the powder and granular material processing apparatus. The filter cleaning apparatus 1 is a cleaning apparatus designed exclusively for the cartridge filter. After being removed from the powder and granular material processing apparatus, the cartridge filter is cleaned inside the filter cleaning apparatus 1.

As shown in FIGS. 1 and 2, the filter cleaning apparatus 1 is equipped with a processing container 2 formed in the shape of a box. The processing container 2 is filled with a cleaning liquid 10. In the filter cleaning apparatus 1, a cartridge filter 3 (simply referred to as filter 3, hereinafter) is immersed in the cleaning liquid 10 and then rotated by a bubble flow BF or the like to carry out a cleaning process. The processing container 2 made of acrylic resin is transparent, enabling what is happening inside, or how the filter is being cleaned, to be viewed from the outside of the device. Attached to the bottom of the processing container 2 is a base plate 4 made of metal such as stainless steel. Attached to the bottom face of the base plate 4 are supporting legs 5. Thanks to the supporting legs 5, the processing container 2 is put on the surface of a floor.

In the filter cleaning apparatus 1, the filter 3 is laterally laid in the processing container 2 (with the rotational axis being set in the horizontal direction). On the base plate 4 of the processing container 2, filter supporting plates (filter supporting members) 6a and 6b stand. The filter 3 is attached to the upper ends of the filter supporting plates 6a and 6b so as to be capable of rotating. When the cleaning process is carried out, a rotational axis 7 is attached to the filter 3. The rotational axis 7 is supported by the filter supporting plates 6a and 6b so as to be capable of rotating. That is, the filter 3 is set in the processing container 2 so as to be capable of rotating around a rotational axis line O that is substantially horizontal.

In a bottom portion of the processing container 2, air nozzles (nozzle device) 9 are installed to supply a bubble flow. An air supply pipe 9 is connected to the air nozzles 8. Compressed air is supplied to the air nozzles 8 from an external compressor (not shown) through the air supply pipe 9. As shown in FIG. 2, there are two air nozzles 8 that are arranged along a long side of the device. Attached to the undersurface of the base plate 4 is a drain 11, allowing the cleaning liquid 10 inside the processing container 2 to be released down from the drain 11 to the outside of the container.

In the filter cleaning apparatus 1, when compressed air is supplied to the air nozzles 8 through the air supply pipe 9, the bubble flow BF is jetted, upward from the air nozzles 8 to the filter 3. The bubble flow BF is jetted from the air nozzles 8 in the tangential direction to the filter 3. Thanks to the bubble flow BF, the filter 3 rotates around the rotational axis 7. At this time, an uplift pressure (buoyant force) of bubbles rising out of the liquid into the atmosphere is added to the jet pressure of the bubble flow BF jetted from the air nozzles 8. As a result of the synergic effect of the jet pressure and the uplift pressure, the filter 3 rotates in an efficient way.

As described above, in the filter cleaning apparatus 1, the filter 3 is laterally laid in the processing container 2; the bubble flow BF is supplied from below the filter 3 to the filter 3. By the uplift pressure of the bubbles, the rotating force is applied at right angles to the filter 3, thereby enabling the energy of the bubbles to be used efficiently and allowing the filter 3 to rotate in an excellent manner. Therefore, it is possible to carry out an efficient cleaning process.

As the filter cleaning apparatus 1 improves in cleaning efficiency, a sufficient cleaning effect is obtained only with the bubble flow BF without using a water flow in combination with the bubble flow. Therefore, the cleaning process can be carried out in a desired manner without the supply of both the water and bubble flows. Accordingly, a circulation path for a cleaning liquid that needs to be installed when a water flow is used is unnecessary. In this case, the drain 11 for releasing the liquid is satisfactory for the processing container 2, making the configuration of the device simple. Needless to say, the filter cleaning apparatus of the present invention is able to use both the water and bubble flows in the cleaning process.

Needless to say, the present invention is not limited to the above embodiment and can be modified in various ways without departing from the scope of the invention.
For example, in the filter cleaning apparatus 1 illustrated in FIG. 1, an ultrasonic cleaning device may be also used in order to improve the cleaning effect. Instead of the air nozzles 8, bubbling jet nozzles may be used. The number of the air nozzles 8 is not limited to two; the number may vary depending on the size of the filter 3 when needed. In FIGS 1 and 2, in the processing container 2, the liquid surface S of the cleaning liquid 10 is lower in position than the upper end of the filter 3; the filter 3 is not completely submerged in the cleaning liquid 10. However, the liquid surface S may change in position when necessary. The material of the processing container 2 is not limited to acrylic resin; the processing container 2 may be made of metal such as stainless steel, FRP, or the like.

## Claims

1. A filter cleaning apparatus **characterized by** comprising:
a processing container that is so formed as to be capable of retaining a cleaning liquid and housing a filter used in a powder and granular material processing apparatus in such a way that the filter can rotate in the state that the cleaning liquid is poured and retained; and
a nozzle device that is attached to the processing container and jets a bubble flow or a liquid containing bubbles to the filter being immersed in the cleaning liquid to rotate and clean the filter in the cleaning liquid, wherein
the filter is so disposed as to be capable of rotating around a rotational axis line that is substantially horizontal in the processing container, and the nozzle device is disposed below the filter.

2. The filter cleaning apparatus according to claim 1, **characterized in that**
the processing container includes:
a filter supporting member that is disposed in the processing container to support a rotational axis attached to the center of the filter in such a way that the rotational axis can rotate; and
a nozzle device that is disposed in a bottom portion of the processing container and jets a bubble flow or a liquid containing bubbles from below the filter to the filter.

3. The filter cleaning apparatus according to claim 1, **characterized in that**
the filter is a cartridge filter having a pleated structure.

4. A filter cleaning method of cleaning a filter used in a powder and granular material processing apparatus, housing the filter in a processing container in which a a cleaning liquid is reserved, **characterized by** comprising the steps of:
disposing the filter in the processing container with the center of the filter aligned with a rotational axis line that is substantially horizontal in such a way that the filter can rotate; and
jetting a bubble flow or a liquid containing bubbles from a nozzle device disposed below the filter in the processing container to the filter in the tangential direction to rotate and clean the filter by the bubble flow or the liquid containing bubbles.

5. The filter cleaning method according to claim 4, **characterized in that**
the filter is a cartridge filter having a pleated structure.
